# EUROPEAN PATENT APPLICATION

(11) **EP 4 071 411 A1**
(43) Date of publication of application: **12.10.2022**
(21) Application number: 22166597.9
(22) Date of filing: 04.04.2022
(51) Int. Cl.: F24C 7/08, H01R 13/62, H01R 24/38

(54) **COOKING APPLIANCE COMPRISING TEMPERATURE PROBE**

(30) Priority: 08.04.2021 US 202117225183
(71) Applicant: WHIRLPOOL CORPORATION, Benton Harbor Michigan 49022 (US)
(72) Inventor: Tokarski, Milosz Aleksy, 21024 Cassinetta di Biandronno (VA) (IT)
(74) Representative: Spina, Alessandro

(57) **Abstract**

A temperature probe assembly (80) for a cooking appliance (10) includes a receiving body (20) that has a perimeter wall (110) and a recessed surface (22) that is defined by the perimeter wall (110). The recessed surface (22) includes a plurality of pins (24). A first coupling member (26) is operably coupled to the recessed surface (22) of the receiving body (20). A connector (28) is selectively and rotatably coupled to the receiving body (20). The connector (28) has a body (90) and a plurality of rings (32) disposed on the body (90). A second coupling member (34) is operably coupled to the body (90) of the connector (28) proximate to the plurality of rings (32). A temperature probe (36) is operably coupled to the connector (28) via a wire (38).

## Description

### BACKGROUND OF THE DISCLOSURE

The present disclosure generally relates to a compact appliance, and more specifically, to a temperature probe assembly for a compact appliance.

### SUMMARY OF THE DISCLOSURE

According to one aspect of the present disclosure, a compact cooking appliance includes a housing that has an outer shell, an inner surface, and an electrical cavity that is defined between the outer shell and the inner surface. A receiving body is operably coupled to the inner surface of the housing. The receiving body includes a recessed surface and pins that are disposed on the recessed surface. A first coupling member is coupled to the recessed surface of the receiving body that is proximate the pins. A connector is selectively disposed within the receiving body. The connector has an engagement surface and rings circumferentially disposed on the engagement surface. A second coupling member is concentrically aligned within the rings and is coupled to the engagement surface of the connector. The second coupling member is magnetically and selectively coupled to the first coupling member. A probe is operably coupled to the connector via a wire. A cable is operably coupled to the receiving body. A power source is disposed within the electrical cavity and is operably coupled to the receiving body via the cable.

According to another aspect of the present disclosure, a cooking appliance includes a housing that has an inner surface. A receiving body is operably coupled to the inner surface of the housing. The receiving body includes a first coupling member and a plurality of pins that are disposed around the first coupling member. A connector is selectively coupled to the receiving body. The connector includes a second coupling member that is operably coupled to the first coupling member and a plurality of rings that are disposed around the second coupling member. A probe is operably coupled to the connector via a wire. The probe includes a sensor that is configured to detect a temperature of a food item that is disposed in the housing. A cable is operably coupled to the receiving body. A power source is operably coupled to the receiving body via the cable.

According to yet another aspect of the present disclosure, a temperature probe assembly for a cooking appliance includes a receiving body that has a perimeter wall and a recessed surface that is defined by the perimeter wall. The recessed surface includes a plurality of pins. A first coupling member is operably coupled to the recessed surface of the receiving body. A connector is selectively and rotatably coupled to the receiving body. The connector has a body and a plurality of rings disposed on the body. A second coupling member is operably coupled to the body of the connector proximate to the plurality of rings. A temperature probe is operably coupled to the connector via a wire.

These and other features, advantages, and objects of the present disclosure will be further understood and appreciated by those skilled in the art by reference to the following specification, claims, and appended drawings.

### BRIEF DESCRIPTION OF THE DRAWINGS

In the drawings:
FIG. 1 is a front elevational view of a compact cooking appliance with a temperature probe assembly of the present disclosure;
FIG. 2 is an enlarged partial cross-sectional view of a temperature probe assembly of the present disclosure taken along lines II-II of FIG. 1;
FIG. 3 is a top perspective exploded view of a temperature probe assembly of the present disclosure with a connector and a receiving body;
FIG. 4 is an enlarged partial side perspective view of a food item with a probe of the temperature probe assembly of FIG. 1 taken at area IV;
FIG. 5 is an enlarged partial front elevational view of a connector of the present disclosure coupled to an inner surface of the compact cooking appliance of FIG. 1;
FIG. 6 is an enlarged partial front elevational view of the connector of FIG. 5 and a receiving body of the present disclosure;
FIG. 7 is a schematic block diagram of a temperature probe assembly of the present disclosure in communication with a power source via a controller;
FIG. 8 is a partial side cross-sectional view of a connector and a receiving body of the present disclosure with pins of the receiving body in an extended condition; and
FIG. 9 is a partial side cross-sectional view of the connector and the receiving body of FIG. 8 with the pins in a compressed condition.

The components in the figures are not necessarily to scale, emphasis instead being placed upon illustrating the principles described herein.

### DETAILED DESCRIPTION

The present illustrated embodiments reside primarily in combinations of method steps and apparatus components related to a temperature probe assembly. Accordingly, the apparatus components and method steps have been represented, where appropriate, by conventional symbols in the drawings, showing only those specific details that are pertinent to understanding the embodiments of the present disclosure so as not to obscure the disclosure with details that will be readily apparent to those of ordinary skill in the art having the benefit of the description herein. Further, like numerals in the description and drawings represent like elements.

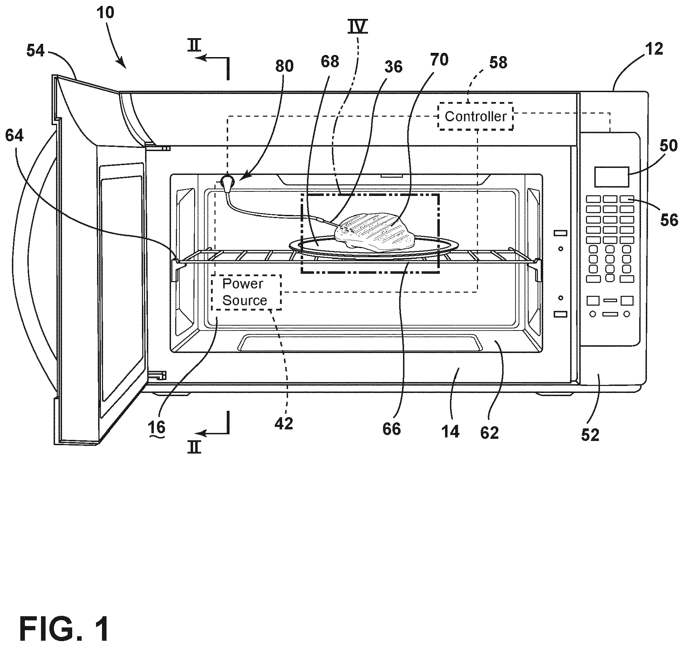

For purposes of description herein, the terms "upper," "lower," "right," "left," "rear," "front," "vertical," "horizontal," and derivatives thereof shall relate to the disclosure as oriented in FIG. 1. Unless stated otherwise, the term "front" shall refer to the surface of the element closer to an intended viewer, and the term "rear" shall refer to the surface of the element further from the intended viewer. However, it is to be understood that the disclosure may assume various alternative orientations, except where expressly specified to the contrary. It is also to be understood that the specific devices and processes illustrated in the attached drawings, and described in the following specification are simply exemplary embodiments of the inventive concepts defined in the appended claims. Hence, specific dimensions and other physical characteristics relating to the embodiments disclosed herein are not to be considered as limiting, unless the claims expressly state otherwise.

The terms "including," "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus. An element proceeded by "comprises a ... " does not, without more constraints, preclude the existence of additional identical elements in the process, method, article, or apparatus that comprises the element.

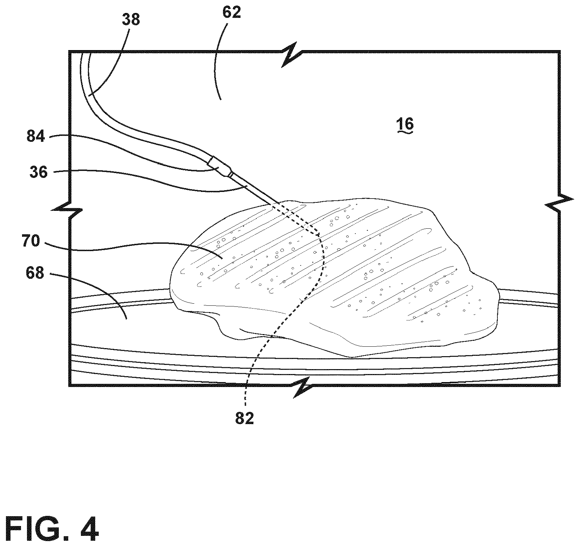

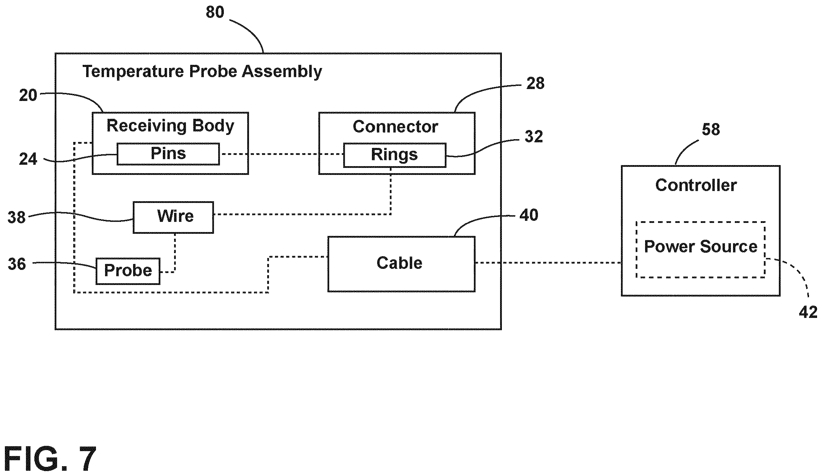

Referring to FIGS. 1-7, reference numeral 10 generally designates a compact cooking appliance that includes a housing 12. The housing 12 has an outer shell 14, an inner surface 16, and an electrical cavity 18 defined between the outer shell 14 and the inner surface 16. A receiving body 20 is operably coupled to the inner surface 16 of the housing 12. The receiving body 20 includes a recessed surface 22 and pins 24 disposed on the recessed surface 22. A first coupling member 26 is coupled to the recessed surface 22 of the receiving body 20 proximate to the pins 24. A connector 28 is selectively disposed within the receiving body 20 and has an engagement surface 30 and rings 32 circumferentially disposed on the engagement surface 30. A second coupling member 34 is concentrically aligned with the rings 32 and is coupled to the engagement surface 30 of the connector 28. The second coupling member 34 is magnetically and selectively coupled to the first coupling member 26 A probe 36 is operably coupled to the connector 28 via a wire 38, and a cable 40 is operably coupled to the receiving body 20. A power source 42 is disposed within the electrical cavity 18 and is operably coupled to the receiving body 20 via the cable 40.

Referring to FIGS. 1-4, the compact cooking appliance 10 may be referred to as a cooking appliance 10. The compact cooking appliance 10 is illustrated in FIG. 1 as a microwave. Additionally or alternatively, the compact cooking appliance 10 may be a toaster oven, air fryer, and/or any other compact cooking appliance generally known in the art. It is also contemplated that the cooking appliance 10 may be a range stove, a freestanding stove, a wall-mounted oven, and/or any other cooking appliance generally known in the art. The cooking appliance 10 includes a user interface 50 defined on a front portion 52 of the housing 12 and a door 54 is operably coupled to the housing 12. The user interface 50 includes tactile indicia 56 disposed on the user interface 50 and that are configured to assist the user in selecting various functions of the cooking appliance 10. The user interface 50 is operably coupled to a controller 58, which is configured to execute the functions selected by the user via the tactile indicia 56. The controller 58 is in electrical communication with the power source 42, mentioned above. It is generally contemplated that the power source 42 is disposed within or otherwise integrally formed with the controller 58. Stated differently, the controller 58 is configured to transmit electrical power to the receiving body 20 via the integrated power source 42. It is also contemplated that the power source 42 may provide power to both the receiving body 20, as mentioned above and described below, and the cooking appliance 10 as a whole.

As mentioned above, the receiving body 20 is operably coupled to the inner surface 16 of the housing 12. The inner surface 16 of the housing 12 can define an aperture 60 through which the cable 40 extends. The electrical cavity 18 is defined between the outer shell 14 and the inner surface 16 of the housing 12 in which the controller 58 is disposed. It is generally contemplated that the power source 42 may include a high-voltage power source, such as a transformer and/or an electronic power converter. The cable 40 is operably coupled to the power source 42 and is configured to direct electrical power to the receiving body 20, described in further detail below.

With further reference to FIGS. 1-4, the housing 12 also defines an interior cavity 62 and supports 64 extending from the inner surface 16 of the housing 12. The supports 64 may be pegs, rails, and/or other support members generally known in the art. Additionally or alternatively, the inner surface 16 may define opposing grooves in place of the supports 64. It is generally contemplated that a rack 66 may be positioned on the supports 64 within the interior cavity 62. In an alternate configuration, the rack 66 may be positioned with the grooves defined by the inner surface 16. A support surface 68 may be disposed on the rack 66 and is generally configured to support a food item 70 within the cooking appliance 10. By way of example, not limitation, the support surface 68 may be a tray, a baking rack, a pan, or any other practicable support item. It is also contemplated that the food item 70 may be disposed on the rack 66.

With further reference to FIGS. 1-4, the user may position the food item 70 along with the support surface 68 on the rack 66 within the interior cavity 62. A temperature probe assembly 80 is operably coupled to the food item 70 and configured to measure a temperature of the food item 70. The temperature probe assembly 80, or probe assembly, includes those features mentioned above including, but not limited to, the receiving body 20, the connector 28, and the probe 36. The probe 36, or temperature probe, is generally positioned within the food item 70 to detect the temperature of the food item 70.

The probe 36 includes a first end 82 and a second end 84. The first end 82 is configured to be inserted into the food item 70, such that the first end 82 may define a point and/or may be generally configured to penetrate the food item 70. It is contemplated that the second end 84 of the probe 36 may remain exposed exterior to the food item 70. The probe 36 may also include a sensor 86 disposed proximate to the first end 82 of the probe 36. Additionally or alternatively, the probe 36 may include multiple sensors 86. The sensor 86 is communicatively coupled to the controller 58 and is configured to communicate the detected temperature of the food item 70 with the controller 58. It is generally contemplated that the controller 58 may adjust or otherwise alter the cooking time based on the temperature detected by the sensor 86. The controller 58 may display the altered cooking time and/or the detected temperature of the food item 70 on the user interface 50.

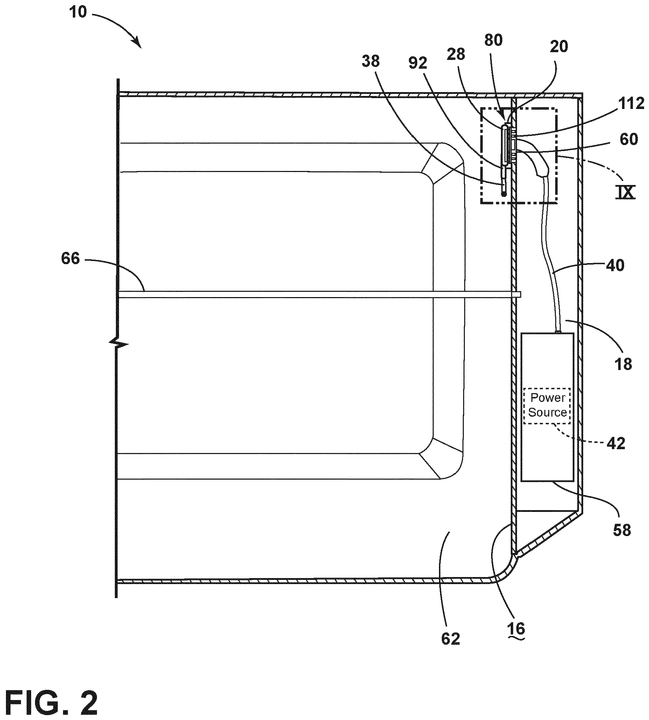

Referring now to FIGS. 2-5, the probe 36 is coupled to the connector 28 via the wire 38 to, ultimately, receive electrical power from the power source 42. The wire 38 is generally insulated, such that the wire 38 can withstand various cooking temperatures. The wire 38 is also flexible, such that the wire 38 may flex, bend, and be otherwise manipulated within the interior cavity 62 relative to the food item 70. For example, the food item 70 may be positioned on the turntable 72 As mentioned above, the wire 38 operably and communicatively couples the probe 36 to the connector 28 to transfer electricity from the power source 42 to the probe 36. The connector 28 is selectively and operably coupled to the receiving body 20 to complete an electrical circuit between the power source 42 and the probe 36.

The connector 28 includes a body 90 that includes an extension 92 through which the wire 38 extends. The extension 92 generally extends from a central portion 94 of a first side 96 of the body 90, such that the extension 92 may be integrally formed with the body 90. The first side 96 may be externally visible, such that the first side 96 and the extension 92 are visible to the user within the interior cavity 62 of the cooking appliance 10. It is also contemplated that the extension 92 may be configured as an adaptor that is operably coupled to the body 90 of the connector 28. In either configuration, the extension 92 may generally protrude from the body 90 to generally separate the extension 92 and the wire 38 from the body 90. Stated differently, the extension 92 is generally offset and/or raised relative to a second side 98 of the body 90.

With further reference to FIGS. 2-5, the second side 98 of the body 90 generally defines an engagement surface 30 on which the rings 32 are disposed. The engagement surface 30 is configured to couple to the receiving body 20, as described in more detail below. The rings 32 are disposed on the engagement surface 30 and circumferentially surround the second coupling member 34. The rings 32 are formed from a conductive material, such as metal, to electrically couple the probe 36 to the power source 42 via the wire 38. The rings 32 are configured to provide a bridge or other electrical connection to transfer electrical currents received from the pins 24 of the receiving body 20 via the power source 42, described further below. It is generally contemplated that the connector 28, the wire 38, and the probe 36 are generally free from electrical current when the rings 32 of the connector 28 are disconnected or otherwise uncoupled from the pins 24 of the receiving body 20. The probe 36 is electrically powered when the pins 24 are operably engaged with the rings 32, such that the connector 28 is coupled to the receiving body 20.

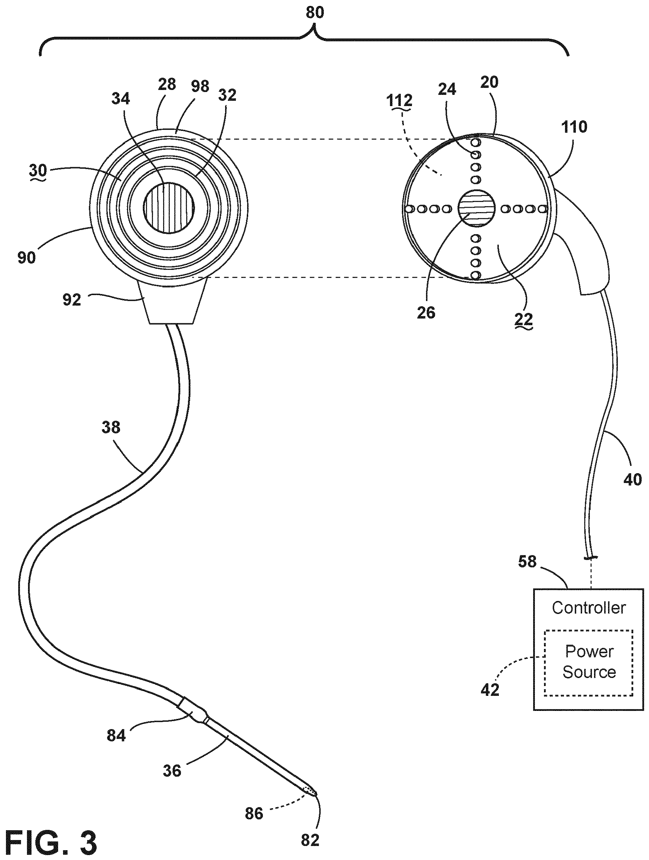

With reference to FIGS. 3-7, the receiving body 20 of the temperature probe assembly 80 is coupled to the inner surface 16 of the housing 12 over the aperture 60 defined by the inner surface 16. As mentioned above, the receiving body 20 includes the first coupling member 26 and the pins 24. Additionally or alternatively, the pins 24 may be disposed on the connector 28 and the rings 32 may be disposed on the receiving body 20. The receiving body 20 also has a perimeter wall 110 and the recessed surface 22 defined by the perimeter wall 110. The recessed surface 22 is configured to receive the connector 28, and an attachment surface 112 of the receiving body 20 is operably coupled to the inner surface 16 of the housing 12. The cable 40 is operably coupled to the attachment surface 112 of the receiving body 20 to electrically couple the receiving body 20 with the power source 42, described below.

The cable 40 extends through the aperture 60 (FIG. 2) defined by the inner surface 16 of the housing 12 to couple to the attachment surface 112 of the receiving body 20. The cable 40 is operably coupled to the power source 42 and provides electrical power to the pins 24 of the receiving body 20. The cable 40 is operably coupled to the controller 58 to communicate data from the temperature probe assembly 80 and be electrically coupled with the power source 42 within the controller 58. As mentioned above, the cable 40 is in electrical communication with the power source 42 as well as each of the pins 24. The cable 40 generally distributes an electrical current to each of the pins 24 when the pins 24 are engaged with the rings 32.

With further reference to FIGS. 3-7, it is generally contemplated that the pins 24 remain inactive when the connector 28 is uncoupled from the receiving body 20. The plurality of pins 24 are typically activated with the cable 40 when the connector 28 is operably coupled to the receiving body 20, such that the rings 32 are engaged with the pins 24. It is generally contemplated that the pins 24 are operable between an extended condition and a compressed condition, otherwise referred to as a first position and a second position, respectively. The pins 24 can be generally proximate to an upper edge 118 of the perimeter wall 110 in the extended condition. The pins 24 enter the compressed condition when the connector 28 is operably coupled to the receiving body 20, such that the rings 32 are engaged with the pins 24 and the cable 40 provides the electrical current for the probe 36 from the power source 42. Stated differently, the cable 40 is configured to electrically couple the probe 36 with the power source 42 via the electrical communication between the rings and pins 32, 24.

Referring still to FIGS. 3-7, the cable 40 is also operably coupled to the pins 24 and is communicatively coupled to the controller 58. The controller 58 can receive data from the probe 36 via the cable 40 and can display the received data on the user interface 50 (FIG. 1). As mentioned above, the sensor 86 detects the temperature of the food item 70 and communicates the detected temperature to the controller 58. The temperature detected is communicated via the wire 38 that couples the probe 36 to the connector 28 and the cable 40 that couples the receiving body 20 to the controller 58. The cable 40 transfers the temperature data to the controller 58 when the rings 32 are engaged with the compressed plurality of rings 32. By way of example, not limitation, it is generally contemplated that the temperature data received by the controller 58 via the cable 40 is in the form of analog signals. Additionally or alternatively, it is also contemplated that the temperature data may be transmitted in the form of digital signals.

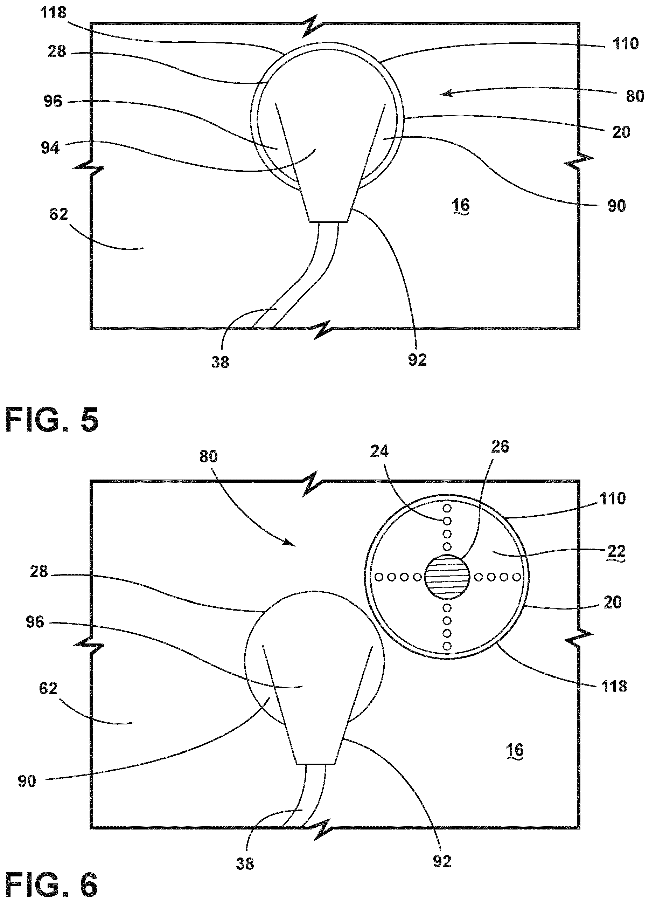

The engagement of the pins 24 with the reciprocal rings 32 completes the electrical circuit between the connector 28 and the receiving body 20. As mentioned above, the pins 24 may be generally compressed within the receiving body 20 when coupled to the rings 32. Each pin 24 is spaced along the recessed surface 22 at intervals equivalent to the spacing of the rings 32 on the engagement surface 30 of the connector 28. As illustrated in FIG. 6, the pins 24 radially extend proximate to the first coupling member 26 to generally define a cross configuration. Additionally or alternatively, the pins 24 may be disposed on the recessed surface 22 and other configurations generally known in the art. It is also contemplated that the receiving body 20 can include a single pin 24 on the recessed surface 22 to engage at least one of the rings 32 of the connector 28.

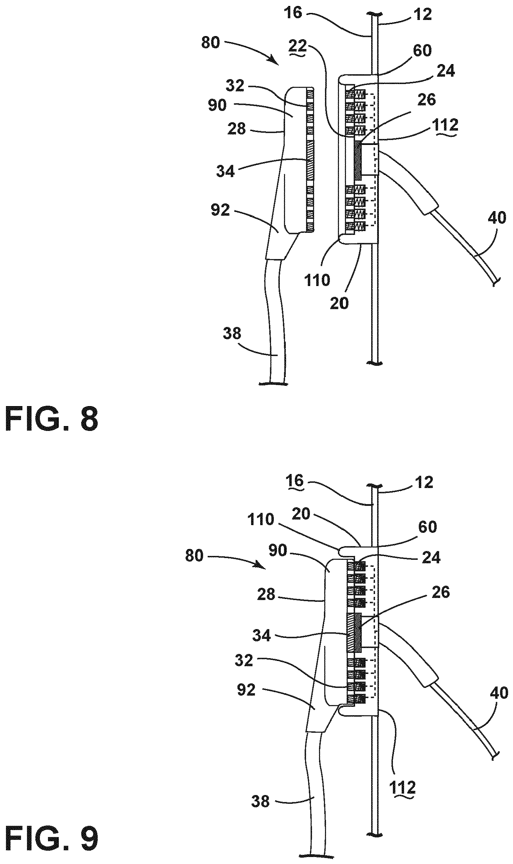

Referring to FIGS. 6-9 and as generally discussed above, the pins 24 are formed from a conductive metal material configured to be electrically coupled with the rings 32, which are formed from a corresponding metal material. It is generally contemplated that the metal material may be formed from a metal such as copper or other conductive metals typically used in electrical communication. The electrical communication between the pins 24 and the rings 32 is activated when the connector 28 is positioned within the receiving body 20, as described above. The connector 28 generally aligns the rings 32 with the pins 24, and the pins 24 are generally compressed by the body 90 of the connector 28, as illustrated in FIG. 9. The compression of the pins 24 by the body 90 engages the pins 24 with the rings 32, such that the electrical communication between the receiving body 20 and the connector 28 is activated.

Referring again to FIGS. 1-9, the connector 28 is operably coupled to the receiving body 20 via the attraction between the second coupling member 34 and the first coupling member 26. The first and second coupling members 26, 34 assist in the selective coupling and uncoupling of the connector 28 and the receiving body 20 via magnetic connection. The first coupling member 26 is a ferromagnetic member configured to attract the second coupling member 34 and least partially define a magnetic connection between the first and second coupling members 26, 34. The ferromagnetic member of the first coupling member 26 may include, but is not limited to, iron, nickel, cobalt, and/or alloys of rare earth metals. It is generally contemplated that the first coupling member 26 is formed from iron, and the second coupling member 34 is a magnet configured to magnetically couple to the ferromagnetic member of the first coupling member 26. The magnetic connection defined between first and second coupling members 26, 34 retains the body 90 of the connector 28 within the receiving body 20.

The body 90 is generally recessed within the receiving body 20, such that the perimeter wall 110 of the receiving body 20 at least partially surrounds the body 90 of the connector 28. The extension 92 is disposed exterior to the perimeter wall 110, such that the extension 92 is generally free from engagement with the receiving body 20. It is generally contemplated that the body 90 of the connector 28 may rotate within the receiving body 20 while remaining coupled via the first and second coupling members 26, 34. The magnetic connection between the first and second coupling members 26, 34 retains the connector 28 within the receiving body 20 as the probe 36 and wire 38 rotate or are otherwise adjusted within the interior cavity 62 of the cooking appliance 10.

With reference to FIGS 1-9, the user may place the probe 36 within the food item 70 prior to placement of the food item 70 within the cooking appliance 10. The connector 28 may then be magnetically coupled to the receiving body 20 when the user positions the food item 70 and the probe 36 within the interior cavity 62. It is generally contemplated that the user may have the probe 36 of the temperature probe assembly 80 disposed within the food item 70 within the cooking appliance 10, and the user may remove the food item 70 with the probe 36 of the temperature probe assembly 80 without separately uncoupling the connector 28 from the receiving body 20.

The connector 28 may be disconnected from the receiving body 20 via a force applied by the user when removing the food item 70 from the interior cavity 62. As the connector 28 is operably coupled to the receiving body 20 via the magnetic connection between the first coupling member 26 and the second coupling member 34. The user can easily remove the food item 70, along with a portion of the temperature probe assembly 80, from the appliance 10. Stated differently, the user may remove the food item 70 and simultaneously remove the probe 36, the wire 38, and the connector 28 of the temperature probe assembly 80 from the interior cavity 62 of the cooking appliance 10. The magnetic connection between the connector 28 and the receiving body 20 minimizes the overall tension upon the temperature probe assembly 80.

For example, minimal forces are applied on the connector 28 if the food item 70 is adjusted as the connector 28 can freely rotate within the receiving body 20 and easily disconnect when removing or adjusting the temperature probe assembly 80 relative to the food item 70. Stated differently, the connector 28 is able to rotate within the receiving body 20 while remaining coupled to the receiving body 20. The connector 28 may correspondingly adjust and rotate within the receiving body 20 while maintaining the electrical connection between the pins 24 of the receiving body 20 and the rings 32 of the connector 28. The electrical circuit defined between the pins 24 and the rings 32 is disconnected once the pins 24 are extended after the connector 28 is uncoupled from the receiving body 20. The cable 40 may receive a signal from the pins 24 indicating the removal of the connector 28 from the receiving body 20, such that the controller 58 may indicate the detected disconnect on the user interface 50.

The invention disclosed herein is further summarized in the following paragraphs and is further characterized by combinations of any and all of the various aspects described therein.

According to one aspect of the present disclosure, a compact cooking appliance includes a housing that has an outer shell, an inner surface, and an electrical cavity that is defined between the outer shell and the inner surface. A receiving body is operably coupled to the inner surface of the housing. The receiving body includes a recessed surface and pins that are disposed on the recessed surface. A first coupling member is coupled to the recessed surface of the receiving body that is proximate the pins. A connector is selectively disposed within the receiving body. The connector has an engagement surface and rings circumferentially disposed on the engagement surface. A second coupling member is concentrically aligned within the rings and is coupled to the engagement surface of the connector. The second coupling member is magnetically and selectively coupled to the first coupling member. A probe is operably coupled to the connector via a wire. A cable is operably coupled to the receiving body. A power source is disposed within the electrical cavity and is operably coupled to the receiving body via the cable.

According to another aspect, a first coupling member includes a ferromagnetic member and a second coupling member includes a magnet.

According to another aspect, a controller is communicatively coupled to a probe via rings and pins.

According to another aspect, pins are operable between a compressed condition and an extended condition, and the compressed condition is defined by the rings being operably coupled with the pins and a connector being coupled to a receiving body.

According to another aspect, a connector includes an extension and a body, and the body is disposed within a receiving body and the extension is external to the receiving body and is operably coupled to a probe via a wire.

According to another aspect, a receiving body includes a perimeter wall disposed around a body of a connector.

According to another aspect, a probe is electrically coupled to a power source via pins and rings.

According to another aspect of the present disclosure, a cooking appliance includes a housing that has an inner surface. A receiving body is operably coupled to the inner surface of the housing. The receiving body includes a first coupling member and a plurality of pins that are disposed around the first coupling member. A connector is selectively coupled to the receiving body. The connector includes a second coupling member that is operably coupled to the first coupling member and a plurality of rings that are disposed around the second coupling member. A probe is operably coupled to the connector via a wire. The probe includes a sensor that is configured to detect a temperature of a food item that is disposed in the housing. A cable is operably coupled to the receiving body. A power source is operably coupled to the receiving body via the cable.

According to another aspect, a first coupling member is a ferromagnetic member, and a second coupling member is a magnet that is selectively coupled to the ferromagnetic member.

According to another aspect, a receiving body includes a perimeter wall and a recessed surface that is defined by the perimeter wall, and a connector is selectively coupled to the receiving body via a second coupling member.

According to another aspect, a cable communicatively coupled to a plurality of pins of a receiving body.

According to another aspect, a plurality of pins of a receiving body are selectively and communicatively coupled to a plurality of rings of a connector.

According to another aspect, a probe is in electrical communication with a power source via a plurality of pins of a receiving body and a plurality of rings of a connector, and a data cable is configured to receive temperature data from the probe via the plurality of rings and the plurality of pins.

According to another aspect, a plurality of pins of a receiving body are operable between an extended position and a compressed condition, and a plurality of rings of a connector are coupled to the plurality of pins in the compressed condition.

According to yet another aspect of the present disclosure, a temperature probe assembly for a cooking appliance includes a receiving body that has a perimeter wall and a recessed surface that is defined by the perimeter wall. The recessed surface includes a plurality of pins. A first coupling member is operably coupled to the recessed surface of the receiving body. A connector is selectively and rotatably coupled to the receiving body. The connector has a body and a plurality of rings disposed on the body. A second coupling member is operably coupled to the body of the connector proximate to the plurality of rings. A temperature probe is operably coupled to the connector via a wire.

According to another aspect, a connector is operably coupled to a receiving body via a second coupling member.

According to another aspect, a second coupling member is selectively and operably coupled to a first coupling member, and the first coupling member includes a ferromagnetic member.

According to another aspect, a second coupling member includes a magnet selectively coupled to a ferromagnetic member of a first coupling member.

According to another aspect, a plurality of rings of a connector are communicatively coupled to a plurality of pins of a receiving body.

According to another aspect, a plurality of pins are operable between a first position and a second position, and a plurality of rings are operably coupled to a plurality of pins in the second position.

It will be understood by one having ordinary skill in the art that construction of the described disclosure and other components is not limited to any specific material. Other exemplary embodiments of the disclosure disclosed herein may be formed from a wide variety of materials, unless described otherwise herein.

For purposes of this disclosure, the term "coupled" (in all of its forms, couple, coupling, coupled, etc.) generally means the joining of two components (electrical or mechanical) directly or indirectly to one another. Such joining may be stationary in nature or movable in nature. Such joining may be achieved with the two components (electrical or mechanical) and any additional intermediate members being integrally formed as a single unitary body with one another or with the two components. Such joining may be permanent in nature or may be removable or releasable in nature unless otherwise stated.

It is also important to note that the construction and arrangement of the elements of the disclosure as shown in the exemplary embodiments is illustrative only. Although only a few embodiments of the present innovations have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter recited. For example, elements shown as integrally formed may be constructed of multiple parts or elements shown as multiple parts may be integrally formed, the operation of the interfaces may be reversed or otherwise varied, the length or width of the structures and/or members or connector or other elements of the system may be varied, the nature or number of adjustment positions provided between the elements may be varied. It should be noted that the elements and/or assemblies of the system may be constructed from any of a wide variety of materials that provide sufficient strength or durability, in any of a wide variety of colors, textures, and combinations. Accordingly, all such modifications are intended to be included within the scope of the present innovations. Other substitutions, modifications, changes, and omissions may be made in the design, operating conditions, and arrangement of the desired and other exemplary embodiments without departing from the spirit of the present innovations.

It will be understood that any described processes or steps within described processes may be combined with other disclosed processes or steps to form structures within the scope of the present disclosure. The exemplary structures and processes disclosed herein are for illustrative purposes and are not to be construed as limiting.

## Claims

1. A compact cooking appliance (10), comprising:
a housing (12) having an outer shell (14), an inner surface (16), and an electrical cavity (18) defined between the outer shell (14) and the inner surface (16);
a receiving body (20) operably coupled to the inner surface (16) of the housing (12), the receiving body (20) including a recessed surface (22) and pins (24) disposed on the recessed surface (22);
a first coupling member (26) is coupled to the recessed surface (22) of the receiving body (20) proximate the pins (24);
a connector (28) selectively disposed within the receiving body (20), the connector (28) having an engagement surface (30) and rings (32) circumferentially disposed on the engagement surface (30);
a second coupling member (34) concentrically aligned within the rings (32) and coupled to the engagement surface (30) of the connector (28), the second coupling member (34) magnetically and selectively coupled to the first coupling member (26);
a probe (36) operably coupled to the connector (28) via a wire (38);
a cable (40) operably coupled to the receiving body (20); and
a power source (42) disposed within the electrical cavity (18) and operably coupled to the receiving body (20) via the cable (40).

2. The compact cooking appliance (10) of claim 1, wherein the first coupling member (26) comprises a ferromagnetic member and the second coupling member (34) comprises a magnet.

3. The compact cooking appliance (10) of claim 2, wherein the second coupling member (34) is selectively coupled to the ferromagnetic member of the first coupling member (26).

4. The compact cooking appliance (10) of any one of claims 1-3, further comprising:
a controller (58) communicatively coupled to the probe (36) via the rings (32) and the pins (24).

5. The compact cooking appliance (10) of any one of claims 1-4, wherein the pins (24) are operable between a compressed condition and an extended condition.

6. The compact cooking appliance (10) of any one of claims 1-5, wherein the connector (28) includes an extension (92) and a body (90), and wherein the body (90) is disposed within the receiving body (20) and the extension (92) is external to the receiving body (20) and operably coupled to the probe (36) via the wire (38).

7. The compact cooking appliance (10) of claim 6, wherein the receiving body (20) includes a perimeter wall (110) disposed around the body (90) of the connector (28).

8. The compact cooking appliance (10) of any one of claims 1-7, wherein the probe (36) is electrically coupled to the power source (42) via the pins (24) and the rings (32).

9. The compact cooking appliance (10) of any one of claims 1-8, wherein the connector (28) is selectively coupled to the receiving body (20) via the second coupling member (34).

10. The compact cooking appliance (10) of any one of claims 1-9, wherein the cable (40) is electrically and communicatively coupled to the pins (24) of the receiving body (20).

11. The compact cooking appliance (10) of claim 10, wherein the pins (24) of the receiving body (20) are selectively and communicatively coupled to the rings (32) of the connector (28).

12. The compact cooking appliance (10) of claim 5, wherein the rings (32) of the connector (28) are coupled to the pins (24) in the compressed condition.
